# EUROPÄISCHE PATENTSCHRIFT

(11) **EP 1 777 242 B1**
(45) Veröffentlichungstag und Bekanntmachung des Hinweises auf die Patenterteilung: **23.07.2008**
(21) Anmeldenummer: 06121733.7
(22) Anmeldetag: 04.10.2006
(51) Int. Cl.: C08G 18/18, C08G 18/20, B01J 31/04, B29C 44/12, B29C 44/32

(54) **Polyurethanschaumstoffe zur Rohrdämmung**
Polyurethane foams for insulating pipes
Mousse de polyuréthane pour des tuyaux calorifuges

(30) Priorität: 19.10.2005 DE 102005050412
(43) Veröffentlichungstag der Anmeldung: 25.04.2007
(73) Patentinhaber: BASF SE, 67056 Ludwigshafen (DE)
(72) Erfinder: Grieser-Schmitz, Christof, 49076, Osnabrück (DE); Ellersiek, Carsten, 49525, Lengerich (DE)

(56) Entgegenhaltungen:
- EP-A2- 0 865 893
- WO-A-20/04024411
- DE-A1- 10 145 458
- US-A- 5 407 967
- US-A- 5 859 082

## Beschreibung

Die Erfindung betrifft gedämmte Rohre, aufgebaut aus
i) Mediumrohr,
ii) Polyurethanschaumstoff und
iii) Mantelrohr,
wobei der Polyurethanschaumstoff zwischen Mediumrohr (i) und Mantelrohr (iii) Glycin, N-((2-Hydroxy-5-nonylphenyl)methyl)-N-methyl-mononatrium Salz (CAS-Nummer 56968-08-2) enthält. Außerdem bezieht sich die Erfindung auf Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
wobei man vor der Umsetzung der Isocyanatkomponente (a) mit der Polyolmischung (b) Glycin, N-((2-Hydroxy-5-nonylphenyl)methyl)-N-methyl-mononatrium Salz (CAS-Nummer 56968-08-2) in die Isocyanatkomponente (a) und/oder die Polyolmischung (b), bevorzugt in die Polyolmischung (b) mischt.

Mit Polyurethanschaumstoffen gedämmte Rohre sind im Stand der Technik bekannt und beispielsweise in EP-A-865 893 und DE-A-197 42 012 beschrieben.

Der überwiegende Anteil an vorgedämmten Rohren, die PUR-Schaum zur Dämmung nutzen wird mit Hilfe der diskontinuierlichen Rohr-in-Rohr Produktion hergestellt. Im Rahmen dieses Verfahrens wird das Mediumrohr (in der Regel Stahl) mit sternförmigen Abstandshaltern versehen, die der Zentrierung des inneren Rohres dienen. Das Mediumrohr wird in das äußere Hüllrohr geschoben (in der Regel Polyethylen), so dass sich ein Ringspalt zwischen beiden Rohren ergibt. Aufgrund seiner hervorragenden Dämmeigenschaften wird dieser Ringspalt mit Polyurethanschaum gefüllt. Hierfür wird das leicht geneigte Doppelrohr mit Abschlusskappen versehen, die mit Entlüftungslöchern ausgestattet sind. Anschließend wird in den Ringspalt mittels einer Polyurethandosiermaschine das flüssige Reaktionsgemisch eingefüllt welches in noch flüssiger Form im Rohrspalt hinunter fließt bis die Reaktion einsetzt. Ab diesem Zeitpunkt findet die weitere Verteilung durch Fließen des langsam in der Viskosität ansteigenden Schaums statt, bis das Material ausreagiert ist.

Neben der oben beschriebenen Methode gibt es noch weitere Möglichkeiten entsprechende Rohre herzustellen. Ein innovatives Verfahren hierfür stellt die "Lanzentechnik" dar. Hierbei wird der Mischkopf während der Produktion durch den Ringspalt bewegt. Hierfür kann entweder der Mischkopf selbst oder das Rohr bewegt werden. Währenddessen strömt das flüssige PUR-Reaktionsgemisch aus, steigt auf und kann dann das Rohr tragen. Deshalb können bei diesem Verfahren die oben erwähnten Abstandshalter entfallen. Mit dem Lanzenverfahren können Rohre mit einer niedrigeren Schaumdichte bzw. besseren Schaumdichtenverteilung hergestellt werden. Ein weiterer Vorteil ist die Möglichkeit, feinzelligere Schäume einzusetzen, die durch den Einsatz reaktiverer Polyolkomponenten erzielt werden können.

Beim Lanzenverfahren treten zwei Probleme einzeln oder kombiniert auf: Mangelnde Druckfestigkeiten (Bedingung > 0,3 N/mm² nach EN 253:2003) und/oder ungenügende Zentrierung des Stahlrohres (Tabelle 7, Koaxialitätstoleranz in Abhängigkeit vom Nennaußendurchmesser, EN 253:2003).

Aufgabe der Erfindung war es daher, ein Polyurethansystem bereitzustellen, welches vorteilhaft bei der Herstellung von gedämmten Rohren verwendet werden kann und dort zu einem Polyurethanschaumstoff mit sehr guter Druckfestigkeit (> 0,3 N/mm² nach EN 253) führt, mit dem eine hervorragende Zentrierung des Stahlrohres (Mediumrohrs) ermöglicht wird.

Die Aufgabe konnte durch ein gedämmtes Rohr gelöst werden, das aufgebaut ist aus
i) Mediumrohr
ii) Polyurethanschaumstoff und
iii) Mantelrohr,
und wobei der Polyurethanschaumstoff zwischen Mediumrohr (i) und Mantelrohr (iii) Glycin, N-((2-Hydroxy-5-nonylphenyl)methyl)-N-methyl-mononatrium Salz (CAS-Nummer 56968-08-2) enthält. In dieser Schrift gilt im Zweifel die CAS-Nummer als eindeutige chemische Bezeichnung. In dem erfindungsgemäßen Polyurethanschaumstoff können gegebenenfalls auch Umsetzungsprodukte des erfindungsgemäßen Katalysators vorliegen.

Durch den Einsatz dieses erfindungsgemäßen Katalysators kann man wie gewünscht die Steigzeit und die Durchhärtung des Schaums beeinflussen, ohne die Anfangsphase der Reaktion wesentlich zu beeinflussen. Diese Katalyse beeinflusst die Reaktion dahingehend, dass schneller ein Zustand erreicht wird, an dem der Schaum das Rohr selbstständig tragen kann, so dass das Rohr nicht "nach unten durchhängt". Das schnelle Durchziehen des Schaums (Steigzeit und Abbindezeit nähern sich an) führt dazu, dass der Schaum, der bereits oberhalb des Stahlrohres ist (bezogen auf den Querschnitt des Rohres zwischen 10 Uhr und 2 Uhr liegt), schneller hart wird und Kraft aufnehmen kann. Dadurch wird das Stahlrohr nicht hochgedrückt.

Bevorzugt sind in dem Polyurethanschaumstoff zwischen 0,01 und 2,5 Gew.-%, besonders bevorzugt zwischen 0,01 und 1,5 Gew.-% Glycin, N-((2-Hydroxy-5-nonylphenyl)methyl)-N-methyl-mononatrium Salz (CAS-Nummer 56968-08-2), bezogen auf das Gesamtgewicht des Polyurethanschaumstoffs, enthalten.

Bevorzugt werden zusätzlich zu dem erfindungsgemäßen Katalysator weitere allgemein bekannte Katalysatoren eingesetzt, besonders bevorzugt enthält der Polyurethanschaumstoff zusätzlich zu Glycin, N-((2-Hydroxy-5-nonylphenyl)methyl)-N-methyl-mononatrium Salz (CAS-Nummer 56968-08-2) auch (2-Hydroxypropyl)-trimethylammonium-2-ethylhexanoat (CAS-Nummer 62314-22-1), 1-Propanammonium-2-hydroxy-N,N,N-trimethyl-formiat, Trimethylhydroxypropylammoniumformiat, 2-((2-Dimethylamino)ethyl)methylamino)ethanol (CAS-Nummer 2212-32-0) und/oder N,N',N"-Tris(dimethylamino-propyl)hexahydrotriazin (CAS-Nummer 15875-13-5), besonders bevorzugt N,N',N"-Tris(dimethylamino-propyl)hexahydrotriazin (CAS-Nummer 15875-13-5). Bevorzugt sind in dem Polyurethanschaumstoff zwischen 0,01 und 2,5 Gew.-%, besonders bevorzugt zwischen 0,01 und 1,5 Gew.-% N,N',N"-Tris(dimethylamino-propyl)hexahydrotriazin (CAS-Nummer 15875-13-5), bezogen auf das Gesamtgewicht des Polyurethanschaumstoffs, enthalten. Diese bevorzugt zusätzlich zu dem erfindungsgemäßen Katalysator eingesetzten Katalysatoren bieten den Vorteil, dass sie zu einem gleichmäßigen Aufschäumen des Schaumes führen und neben der PUR-Reaktion auch leicht die PIR-Reaktion katalysieren. Sie wirken daher unterstützend und verbessern die Wirkungsweise von Glycin, N-((2-Hydroxy-5-nonylphenyl)methyl)-N-methyl-mononatrium (CAS-Nummer 56968-08-2).

Besonders bevorzugt enthält der Polyurethanschaumstoff zusätzlich zu Glycin, N-((2-Hydroxy-5-nonylphenyl)methyl)-N-methyl-mononatrium Salz (CAS-Nummer 56968-08-2) auch Dimethylcyclohexylamin (CAS-Nummer 98-94-2), insbesondere in einer Menge zwischen 0,01 und 2,5 Gew.-%, besonders bevorzugt zwischen 0,01 und 1,5 Gew.-% Dimethylcyclohexylamin, bezogen auf das Gesamtgewicht des Polyurethanschaumstoffs. Durch diesen zusätzlichen Katalysator kann erreicht werden, dass die Grundreaktivität des Schaumes ausreichend ist, um ein gleichmäßiges Aufschäumen des Schaumes zu gewährleisten und in Kombination mit den anderen Katalysatoren das Aufschwimmen des Rohres zu verhindern.

Besonders bevorzugt enthält der Polyurethanschaumstoff zusätzlich zu Glycin, N-((2-Hydroxy-5-nonylphenyl)methyl)-N-methyl-mononatrium Salz (CAS-Nummer 56968-08-2) auch Methylbis(2-dimethylaminoethyl)amin (CAS-Nummer 3030-47-5) und/oder N,N,N',N'-tetramethyl-2,2'oxybis(ethylamin) (CAS-Nummer 3033-62-3), insbesondere in einer Menge zwischen 0,01 und 2,5 Gew.-%, besonders bevorzugt zwischen 0,01 und 1,5 Gew.-% Methylbis(2-dimethylaminoethyl)amin (CAS-Nummer 3030-47-5) und/oder N,N,N',N'-tetramethyl-2,2'oxybis(ethylamin) (CAS-Nummer 3033-62-3), bezogen auf das Gesamtgewicht des Polyurethanschaumstoffs, enthält. Dabei bezieht sich die Gewichtsangabe auf die Summe der Gewichte der Katalysatoren, d.h. wenn nur einer der beiden Katalysatoren anwesend ist, nur auf das Gewicht dieses eingesetzten Katalysators.

Gegenstand der Erfindung sind ferner Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
wobei man vor der Umsetzung der Isocyanatkomponente (a) mit der Polyolmischung (b) Glycin, N-((2-Hydroxy-5-nonylphenyl)methyl)-N-methyl-mononatrium Salz (CAS-Nummer 56968-08-2) in die Isocyanatkomponente (a) und/oder die Polyolmischung (b), bevorzugt in die Polyolmischung mischt.

Bevorzugt wird man zwischen 0,01 und 3,5 Gew.-% Glycin, N-((2-Hydroxy-5-nonylphenyl)methyl)-N-methyl-mononatrium Salz (CAS-Nummer 56968-08-2) in die Polyolmischung (b) mischen, wobei sich die Gewichtsangaben auf das Gesamtgewicht der Polyolmischung (b) enthaltend Glycin, N-((2-Hydroxy-5-nonylphenyl)methyl)-N-methylmononatrium Salz (CAS-Nummer 56968-08-2) bezieht.

Bevorzugt wird man wie eingangs dargestellt zusätzlich zu Glycin, N-((2-Hydroxy-5-nonylphenyl)methyl)-N-methyl-mononatrium Salz (CAS-Nummer 56968-08-2) auch (2-Hydroxypropyl)trimethylammonium-2-ethylhexanoat (CAS-Nummer 62314-22-1), 1-Propanammonium-2-hydroxy-N,N,N-trimethyl-formiat, Trimethylhydroxypropylammoniumformiat , 2-((2-Dimethylamino)ethyl)methylamino)ethanol (CAS-Nummer 2212-32-0) und/oder N,N',N"-Tris(dimethylamino-propyl)hexahydrotriazin (CAS-Nummer 15875-13-5), bevorzugt N,N',N"-Tris(dimethylamino-propyl)hexahydrotriazin einsetzen.

Besonders bevorzugt wird man zwischen 0,01 und 3,5 Gew.-% N,N',N"-Tris(dimethylamino-propyl)hexahydrotriazin in die Polyolmischung (b) mischen, wobei sich die Gewichtsangaben auf das Gesamtgewicht der Polyolmischung (b) enthaltend N,N',N"-Tris(dimethylamino-propyl)hexahydrotriazin bezieht.

Bevorzugt wird man zusätzlich zu Glycin, N-((2-Hydroxy-5-nonylphenyl)methyl)-N-methyl-mononatrium Salz (CAS-Nummer 56968-08-2) als Katalysator (b2) auch Dimethylcyclohexylamin einsetzen. Besonders bevorzugt wird man zwischen 0,01 und 3,5 Gew.-% Dimethylcyclohexylamin in die Polyolmischung (b) mischen, wobei sich die Gewichtsangaben auf das Gesamtgewicht der Polyolmischung (b) enthaltend Dimethylcyclohexylamin bezieht.

Besonders wird man zusätzlich zu Glycin, N-((2-Hydroxy-5-nonylphenyl)methyl)-N-methyl-mononatrium Salz (CAS-Nummer 56968-08-2) als Katalysator (b2) auch Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) einsetzen. Besonders bevorzugt wird man zwischen 0,01 und 3,5 Gew.-% Methylbis(2-dimethylaminoethyl)amin (CAS-Nummer 3030-47-5) und/oder N,N,N',N'-tetramethyl-2,2'oxybis-(ethylamin) (CAS-Nummer 3033-62-3) in die Polyolmischung (b) mischen, wobei sich die Gewichtsangaben auf das Gesamtgewicht der Polyolmischung (b) enthaltend Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) bezieht.

Die bei der Umsetzung eingesetzte Polyolmischung kann üblicherweise (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthalten. Dabei weist die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe bevorzugt eine Viskosität von kleiner 3000 mPas, bevorzugt weniger als 2400 mPas, mehr bevorzugt weniger als 2200 mPasgemessen nach DIN 53019 bei 20 °C, auf. Dabei bezieht sich diese Viskositätsangabe auf Polyolmischungen (b), die wie dargestellt keine physikalischen Treibmittel enthalten. Als Untergrenze der Viskosität haben sich Werte von 200 mPas, bevorzugt 400 mPas, besonders bevorzugt 600 mPas, gemessen nach DIN 53019 bei 20°C, als sinnvoll erwiesen.

Es ist grundsätzlich auch möglich, der Polyolmischung physikalische Treibmittel hinzufügen. Die Zugabe von physikalischem Treibmittel führt jedoch zu einer signifikanten Absenkung der Viskosität. Daher beziehen sich die oben gemachten Angaben zur Viskosität der Polyolmischung (b), auch für den Fall, dass sie physikalische Treibmittel enthält, auf die Viskosität der Polyolmischung (b) ohne Zusatz von physikalischen Treibmitteln.

Diese Ausgangsstoffe werden nachfolgend ausführlich dargestellt:

Als Isocyanatkomponente (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Die Isocyanatkomponente (a) kann auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (a), beispielsweise bei Temperaturen von etwa 80°C, mit Verbindungen mit gegenüber Isocyanaten reaktiven Wasserstoffatomen, bevorzugt mit Polyolen, zu Polyisocyanatprepolymeren umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Zur Herstellung von Polyurethan-Hartschaumstoffen wird insbesondere Roh-MDI eingesetzt.

In einer bevorzugten Ausführungsform wird die Isocyanatkomponente (a) so gewählt, dass sie eine Viskosität weniger als 600 mPas, bevorzugt von 100 bis 450, besonders bevorzugt von 120 bis 350, insbesondere von 180 bis 320 mPas, gemessen nach DIN 53019 bei 20°C, aufweist.

Als Polyole (Bestandteil b1) können allgemein für diesen Zweck bekannte Polyole zum Einsatz kommen. In Betracht kommen z.B. Verbindungen mit mindestens zwei gegenüber Isocyanat reaktiven Gruppen, das heißt mit mindestens zwei mit Isocyanatgruppen reaktiven Wasserstoffatomen. Beispiele hierfür sind Verbindungen mit OH-Gruppen, SH-Gruppen, NH-Gruppen und/oder NH₂-Gruppen.

Als Polyole (Bestandteil b1) kommen bevorzugt Verbindungen auf Basis von Polyesterolen oder Polyetherolen zum Einsatz. Die Funktionalität der Polyetherole und/oder Polyesterole beträgt im allgemeinen 1,9 bis 8, bevorzugt 2,4 bis 7, besonders bevorzugt 2,9 bis 6.

Die Polyole (b1) weisen bevorzugt eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im allgemeinen 1000 mg KOH/g, bevorzugt 900 mg KOH/g, besonders 800 mg KOH/g bewährt. Die oben angegebenen OH-Zahlen beziehen sich auf die Gesamtheit der Polyole (b1), was nicht ausschließt, dass einzelne Bestandteile der Mischung höhere oder niedrigere Werte aufweisen.

Bevorzugt enthält Komponente (b1) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen Alkohohle in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin (TDA), Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Bevorzugt werden als Startermolekül Diethylenglykol, Glycerin und Pentaerythrit verwendet.

Bevorzugt enthält die Polyolmischung (b) mindestens ein Polyol (b1i), dass eine Funktionalität gegenüber Isocyanaten von größer 3 und eine Hydroxylzahl größer 300 mg KOH/g aufweist. Bevorzugt weist das Polyol (b1i) eine Viskosität von kleiner 2500 mPas, gemessen nach DIN 53019 bei 25°C, auf. Besonders bevorzugt wird man als Polyol (b1i) ein Polyetherpolyalkohol einsetzen, dass erhältlich ist durch Alkoxylierung von Saccharose und Diethylenglykol sowie gegebenenfalls Pentaerythrit und/oder Glycerin mit Ethylenoxid und/oder Propylenoxid.

Die Polyolmischung enthält erfindungsgemäß den eingangs dargestellten Katalysator. Optional können als Bestandteil (b2) weitere Katalysatoren enthalten sein, insbesondere die eingangs als bevorzugt dargestellten Katalysatoren. Als Katalysatoren (b2) werden üblicherweise Verbindungen verwendet, welche die PUR- und/oder PIR-Reaktion beschleunigen.

In Betracht kommen bevorzugt organische Zinnverbindungen, wie Zinn-(II)-salze von organischen Carbonsäuren, und/oder basischen Aminverbindungen, bevorzugt tertiäre Amine, wie beispielsweise Triethylamin, und/oder 1,4-Diaza-bicyclo-(2,2,2)-octan. Die Katalysatoren werden im allgemeinen in einer Menge von 0,001 bis 5 Gew.-%, insbesondere von 0,05 bis 3,5 Gew.-% Katalysator, bezogen auf das Gewicht der Komponente (b), eingesetzt.

Die Polyolmischung kann ferner optional als Bestandteil (b3) chemische Treibmittel enthalten. Als chemische Treibmittel sind Wasser oder Carbonsäuren, insbesondere Ameisensäure als chemisches Treibmittel bevorzugt. Das chemische Treibmittel wird im allgemeinen in einer Menge von 0,1 bis 5 Gew.-%, insbesondere von 0,5 bis 3,0 Gew.-%, bezogen auf das Gewicht der Komponente (b), eingesetzt.

Wie vorstehend erwähnt kann die Polyolmischung physikalisches Treibmittel enthalten. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponenten b) eingesetzt.

In einer bevorzugten Ausführungsform enthält die Polyolmischung (b) als Bestandteil (b4) Vernetzer. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin.

Die Vernetzer werden im allgemeinen in einer Menge von 1 bis 10 Gew.-%, bevorzugt von 2 bis 6 Gew.-%, bezogen auf das Gesamtgewicht der Polyolmischung (b) (jedoch ohne physikalische Treibmittel), eingesetzt.

In einer weiteren bevorzugten Ausführungsform enthält die Polyolmischung (b) als Bestandteil (b5) Kettenverlängerungsmittel, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Die Kettenverlängerungsmittel werden im allgemeinen in einer Menge von 2 bis 20 Gew.-%, bevorzugt von 4 bis 15 Gew.-%, bezogen auf das Gesamtgewicht der Polyolmischung (b) (jedoch ohne physikalische Treibmittel), eingesetzt.

Die Komponenten (b4) und (b5) können in der Polyolmischung einzeln oder in Kombination eingesetzt werden.

Durch Umsetzung des erfindungsgemäßen Polyurethansystems sind die erfindungsgemäßen Polyurethanschaumstoffe erhältlich. Bei der Umsetzung werden die Polyisocyanate (a) und die Polyolmischung (b) im allgemeinen in solchen Mengen zur Umsetzung gebracht, dass die Isocyanat-Kennzahl des Schaums 90 bis 250, bevorzugt 100 bis 200 beträgt.

In einer bevorzugten Ausführungsform werden die Komponenten (a) und (b) des Polyurethansystems so gewählt werden, dass der resultierende Schaumstoff eine Druckfestigkeit (bei Rohdichte 60 kg/m³) von größer 0,25 N/mm², bevorzugt größer 0,28 N/mm², besonders bevorzugt größer 0,30 N/mm², gemessen nach DIN 53421, aufweist.

Dem erfindungsgemäßen Polyurethansystem können gegebenenfalls auch noch Zusatzstoffe (b6) einverleibt werden. Unter Zusatzstoffe (b6) werden die im Stand der Technik bekannten und üblichen Hilfs- und Zusatzstoffe verstanden, jedoch ohne physikalische Treibmittel. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen. Anzumerken ist, dass die oben angegebenen bevorzugten Viskositätsbereiche der Komponente (b) sich auf eine Polyolmischung (b) inklusive gegebenenfalls zugesetzter Zusatzstoffe (b6) (aber exklusive gegebenenfalls zugesetztem physikalischem Treibmittel) beziehen.

Die erfindungsgemäßen Polyurethansysteme finden bevorzugt zur Herstellung von gedämmten Rohren, beispielsweise von Fernwärmerohren, Anwendung. Gegenstand der Erfindung ist somit die Verwendung des erfindungsgemäßen Polyurethansystems zur Herstellung von gedämmten Rohren.

In einer bevorzugten Ausführungsform wird das erfindungsgemäße Polyurethansystem zur Herstellung von gedämmten Verbundmantelrohre für erdverlegte Fernwärmenetze gemäß DIN EN 253 verwendet.

Weiterhin ist Gegenstand der Erfindung ein gedämmtes Rohr für erdverlegte Fernwärmenetze, aufgebaut aus
i) einem Mediumrohr
ii) einer Schicht aus Dämmmaterial, enthaltend den erfindungsgemäßen Polyurethanschaumstoff, und
iii) einem Mantelrohr.

Bei dem Mediumrohr (i) handelt es sich im allgemeinen um ein Stahlrohr mit einem Außendurchmesser von 1 bis 120 cm, bevorzugt 4 bis 110 cm und einer Länge von 1 bis 24 Meter, bevorzugt 6 bis 16 Meter.

Auf der Außenseite des Mediumrohres angeordnet ist eine Schicht aus Dämmmaterial (ii), enthaltend den erfindungsgemäßen Polyurethanschaumstoff. Diese Schicht weist im allgemeinen eine Dicke von 1 bis 20 cm, bevorzugt 2 bis 10 cm auf.

In einer bevorzugten Ausführungsform weist die Schicht aus Dämmmaterial eine Gesamtrohdichte von 45 bis 100 kg/m³, bevorzugt von 55 bis 75 kg/m³, besonders bevorzugt von 60 - 65 kg/m³ auf. Unter Gesamtrohdichte ist hier die Rohdichteverteilung über den Rohrquerschnitt und die Rohrlänge gemeint.

Bevorzugt wird man die Umsetzung der Isocyanatkomponente mit der Polyolkomponente bei einer Verdichtung von größer 1,1 durchführen. Unter Verdichtung versteht man den Quotienten aus der Gesamtfülldichte des Rohrspaltes dividiert durch die freigeschäumte Kernrohdichte bestimmt an einem unverdichteten Schaumkörper.

Diese Verdichtung kann dadurch erreicht werden, dass man die Reaktionsprofil des Schaumes so einstellt, dass der frische Schaum den bereits eingefüllten Schaum verdichtet. Anders ausgedrückt verdichtet der Schaum von innen heraus. Diese Verdichtung bietet den Vorteil, dass höhere Druckfestigkeiten sowie ein verbesserte Zentrierung des Mediumrohres erreicht werden können.

In einer weiteren bevorzugten Ausführungsform weist die Schicht aus Dämmmaterial (ii), enthaltend den erfindungsgemäßen Polyurethanschaumstoff eine Wärmeleitfähigkeit von weniger als 27 mW/mK, bevorzugt von 20 bis 26,0, besonders bevorzugt 20 bis 24, gemessen nach EN ISO 8497 auf.

Das Mantelrohr (iii) umgibt die Schicht aus Dämmmaterial und besteht im allgemeinen aus Kunststoff, beispielsweise aus Polyethylen, und weist üblicherweise eine Dicke von 1 bis 30 mm auf. Der Innendurchmesser des Mantelrohrs beträgt im allgemeinen 6 bis 140 cm, bevorzugt 10 bis 120 cm.

Das Mantelrohr (iii) kann gegebenenfalls aus mehreren Schichten bestehen, die beim Extrusionsvorgang zusammengeführt werden. Ein Beispiel hierfür ist das Einbringen von mehrlagigen Folien zwischen PUR-Schaumstoff und PE-Mantel, wobei die Folie zur Verbesserung der Sperrwirkung mindestens eine metallische Lage enthält. Geeignete Mantelrohre dieses Typs sind in EP-A-960 723 beschrieben.

In einer besonders bevorzugten Ausführungsform handelt es sich bei dem gedämmten Rohr um ein gedämmtes Verbundmantelrohr für erdverlegte Fernwärmenetze, welches die Anforderungen von DIN EN 253 erfüllt.

Bevorzugt wird man die Isocyanatkomponente (a) und die Polyolmischung (b) mittels eines Mischkopfes, der axial zwischen Mantelrohr und Mediumrohr bewegt wird, eintragen. Dabei dient der Mischkopf während des Schäumvorganges bevorzugt als Abstandshalter zwischen Mediumrohr und Mantelrohr.

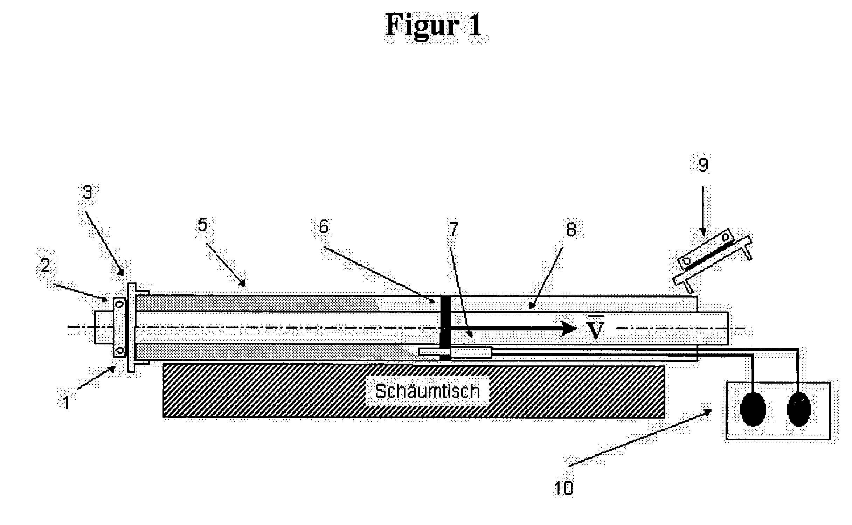

Bevorzugt erfolgt die Herstellung der erfindungsgemäßen Rohre mittels der Lanzentechnik, die beispielhaft in der Figur 1 dargestellt wird. In der Figur 1 haben die Zahlen die folgende Bedeutung:
1: Dichtring
2: Schelle
3: Endkappe
5: Mantelrohr
6: Führungsring
7: Mischkopf
8: Mediumrohr
9: Verschlussdeckel
10: PU-Schäumanlage

In einem Verfahren gemäß Figur 1 handelt es sich um ein diskontinuierliches Verfahren. Im Rahmen dieses Verfahrens wird zwischen dem Mediumrohr (in der Regel Stahl) und dem äußeren Mantelrohr (in der Regel Polyethylen) ein Führungsring mit dem Mischkopf geschoben, der axial beweglich ist und zudem als Abstandshalter zwischen Mediumrohr und Mantelrohr dient. Der Ringspalt zwischen Mediumrohr und Mantelrohr wird aufgrund seiner guten Dämmeigenschaften mit Polyurethanschaumstoff gefüllt. Das Befüllen in den Ringspalt erfolgt bevorzugt mittels einer Polyurethandosiermaschine, die das flüssige Reaktionsgemisch über den Mischkopf in noch flüssiger Form einträgt.

Der Einsatz des erfindungsgemäßen Polyurethansystems führt im erfindungsgemäßen Verfahren zur Herstellung gedämmter Rohre zu folgenden Vorteilen:

Es können Druckfestigkeiten erzielt werden, die oberhalb von 0,25 N/mm² liegen. Idealerweise werden Rohre hergestellt, die Druckfestigkeiten > 0,3 N/mm² besitzen und der EN 253 entsprechen.

Mit dem erfindungsgemäßen Polyurethanschaumstoff können gedämmte Rohre mit einer Zentrierung des Mediumrohres erzielt werden, die die Anforderungen nach Tabelle 7 - Koaxialitätstoleranz in Abhängigkeit vom Nennaußendurchmesser, EN 253:2003 erfüllen

### Beispiele:

Die in der Tabelle 1 dargestellten Rezepturen wurden verschäumt. Die Produkteigenschaften sind ebenfalls in der Tabelle 1 dargestellt.

**Tabelle 1:**

| Beispiel | 1 | 2 | 3 | 4 |
|---|---|---|---|---|
| Polyol A | 40 | - | 40 | - |
| Polyol B | 44,8 | 44,8 | 45,8 | 45,8 |
| Polyol C | 10 | 10 | 10 | 10 |
| Polyol D | - | 40 | - | 40 |
| Tegostab® B 8467 | 1,5 | 1,5 | 1,5 | 1,5 |
| Kat 1 | 0,8 | 0,8 | 0,8 | 0,8 |
| Kat 2 | 0,2 | 0,2 | 0,2 | 0,2 |
| Kat 3 | 0,7 | 0,7 | 0,7 | 0,7 |
| Kat 4 | 1,0 | 1,0 | - | - |
| Wasser | 1,0 | 1,0 | 1,0 | 1,0 |
| Summe | 100,0 | 100,0 | 100,0 | 100,0 |
| Pentan | 6,0 | 6,0 | 6,0 | 6,0 |
| Lupranat® M 20S | 132 | 132 | 132 | 132 |
| Isocyanat-Index | 130 | 130 | 130 | 130 |
| Viskosität [mPa*s] | 2800 | 4200 | 2800 | 4200 |
| Zentrierung-Abweichung (D=125 mm)** | 2 mm | 3 mm | 2 mm | 10 mm |
| Druckfestigkeit*** | 0,42 N/mm² | 0,40 N/mm² | 0,34 N/mm² | 0,25 N/mm² |
| Verdichtungsfaktor | 1,2 | 1,15 | 1,1 | 1,05 |
| | OH-Zahl | Funktionalität | Viskosität [25°C] | MG [g/mol] |
| Polyol A | 403 mg KOH/g | 3,9 | 2200 | 550 |
| Polyol B | 405 mg KOH/g | 3,8 | 17000 | 530 |
| Polyol C | 400 mg KOH/g | 3 | 370 | 420 |
| Polyol D | 490 mg KOH/g | 4,3 | 8300 | 500 |

| | | | | |
|---|---|---|---|---|
| ** EN 253 Prüfkriterium ist Außendurchmesserabhängig, erfüllt bei s = 3 mm (D=75 - 160 mm) *** EN 253 erfüllt, bei Druckfestigkeiten >= 0,3 N/mm² | | | | |

- Polyol A:: gestartet mit Saccharose, Pentaerythrit und Diethylenglykol Polyol B: gestartet mit TDA, alkoxyliert mit EO und PO
- Polyol C:: gestartet mit Glycerin, alkoxyliert mit PO
- Polyol D:: gestartet mit Sorbitol, alkoxyliert mit PO
- Kat 1:: Dimethylcyclohexylamin (CAS-Nummer 98-94-2)
- Kat 2:: Lupragen® N 600 (BASF Aktiengesellschaft), N,N',N"-Tris(dimethylaminopropyl)hexahydrotriazin (CAS-Nummer 15875-13-5)
- Kat 3:: Lupragen® N 301 (BASF Aktiengesellschaft), Methylbis(2-dimethylaminoethyl)amin (CAS-Nummer 3030-47-5)
- Kat 4:: Dabco® Curithane® 52, enthält Glycin, N-((2-Hydroxy-5-nonylphenyl)-methyl)-N-methyl-mononatrium Salz (CAS-Nummer 56968-08-2) Lupranat® M20S (BASF Aktiengesellschaft): MDI

Vergleicht man die Druckfestigkeiten der vier verschiedenen Rezepturen so erkennt man, dass die Zugabe des erfindungsgemäßen Katalysators (Beispiele 1 und 2) zu einer deutlichen Verbesserung der Druckfestigkeit gegenüber der Standardrezeptur führt und eine Zentrierung erreicht wird, die verbessert ist und die EN 253 erreicht.

Der Einsatz des bevorzugten Polyols A (Beispiele 1 und 3) wirkt sich deutlich positiv aus. Gegenüber der Standardrezeptur konnte der Grenzwert der EN 253 von 0,3 N/mm² übersprungen werden. Die Zentrierung des Mediumrohres kann ebenfalls deutlich durch das Polyol verbessert werden und liegt bei der geprüften Rohrdimension von 60,3/125 mm unterhalb der Grenze von 3mm.

## Patentansprüche

1. Gedämmtes Rohr, aufgebaut aus
i) Mediumrohr
ii) Polyurethanschaumstoff und
iii) Mantelrohr,
**dadurch gekennzeichnet, dass** der Polyurethanschaumstoff zwischen Mediumrohr (i) und Mantelrohr (iii) Glycin, N-((2-Hydroxy-5-nonylphenyl)methyl)-N-methyl-mononatrium Salz (CAS-Nummer 56968-08-2) enthält.

2. Gedämmtes Rohr gemäß Anspruch 1, **dadurch gekennzeichnet, dass** der Polyurethanschaumstoff zwischen 0,01 und 2,5 Gew.-% Glycin, N-((2-Hydroxy-5-nonylphenyl)methyl)-N-methyl-mononatrium Salz (CAS-Nummer 56968-08-2), bezogen auf das Gesamtgewicht des Polyurethanschaumstoffs, enthält.

3. Gedämmtes Rohr gemäß Anspruch 1 oder 2, **dadurch gekennzeichnet, dass** der Polyurethanschaumstoff zusätzlich zu Glycin, N-((2-Hydroxy-5-nonylphenyl)-methyl)-N-methyl-mononatrium Salz (CAS-Nummer 56968-08-2) auch (2-Hydroxypropyl)trimethylammonium-2-ethylhexanoat (CAS-Nummer 62314-22-1), 1-Propanammonium-2-hydroxy-N,N,N-trimethyl-formiat, Trimethylhydroxypropylammoniumformiat, 2-((2-Dimethylamino)ethyl)methylamino)ethanol (CAS-Nummer 2212-32-0) und/oder N,N',N"-Tris(dimethylamino-propyl)hexa-hydrotriazin (CAS-Nummer 15875-13-5) enthält.

4. Gedämmtes Rohr gemäß einem der Ansprüche 1 bis 3, **dadurch gekennzeichnet, dass** der Polyurethanschaumstoff zwischen 0,01 und 2,5 Gew.-% N,N',N"-Tris(dimethylamino-propyl)hexahydrotriazin (CAS-Nummer 15875-13-5), bezogen auf das Gesamtgewicht des Polyurethanschaumstoffs, enthält.

5. Gedämmtes Rohr gemäß einem der Ansprüche 1 bis 4, **dadurch gekennzeichnet, dass** der Polyurethanschaumstoff zusätzlich zu Glycin, N-((2-Hydroxy-5-nonylphenyl)methyl)-N-methyl-mononatrium Salz (CAS-Nummer 56968-08-2) auch Dimethylcyclohexylamin (CAS-Nummer 98-94-2) enthält.

6. Gedämmtes Rohr gemäß einem der Ansprüche 1 bis 5, **dadurch gekennzeichnet, dass** der Polyurethanschaumstoff zwischen 0,01 und 2,5 Gew.-% Dimethylcyclohexylamin (CAS-Nummer 98-94-2), bezogen auf das Gesamtgewicht des Polyurethanschaumstoffs, enthält.

7. Gedämmtes Rohr gemäß einem der Ansprüche 1 bis 6, **dadurch gekennzeichnet, dass** der Polyurethanschaumstoff zusätzlich zu Glycin, N-((2-Hydroxy-5-nonylphenyl)methyl)-N-methyl-mononatrium Salz (CAS-Nummer 56968-08-2) auch Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) enthält.

8. Gedämmtes Rohr gemäß einem der Ansprüche 1 bis 7, **dadurch gekennzeichnet, dass** der Polyurethanschaumstoff zwischen 0,01 und 2,5 Gew.-% Methylbis(2-dimethylaminoethyl)amin (CAS-Nummer 3030-47-5) und/oder N,N,N',N'-tetramethyl-2,2'oxybis(ethylamin) (CAS-Nummer 3033-62-3), bezogen auf das Gesamtgewicht des Polyurethanschaumstoffs, enthält.

9. Verfahren zur Herstellung von gedämmten Rohren, umfassend die Schritte:
1) Bereitstellen von Mediumrohr und des Mantelrohrs, wobei das Mediumrohr innerhalb des Mantelrohrs angeordnet ist,
2) Herstellung eines Polyurethanschaumstoffes durch Umsetzung einer Isocyanatkomponente (a) mit einer Polyolmischung (b) zwischen Mediumrohr und Mantelrohr,
**dadurch gekennzeichnet, dass** man vor der Umsetzung der Isocyanatkomponente (a) mit der Polyolmischung (b) Glycin, N-((2-Hydroxy-5-nonylphenyl)methyl)-N-methyl-mononatrium Salz (CAS-Nummer 56968-08-2) in die Isocyanatkomponente (a) und/oder die Polyolmischung (b) mischt.

10. Verfahren gemäß Anspruch 9, **dadurch gekennzeichnet, dass** die Polyolmischung (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe enthält.

11. Verfahren gemäß Anspruch 9 oder 10, **dadurch gekennzeichnet, dass** man zwischen 0,01 und 3,5 Gew.-% Glycin, N-((2-Hydroxy-5-nonylphenyl)methyl)-N-methyl-mononatrium Salz (CAS-Nummer 56968-08-2) in die Polyolmischung (b) mischt, wobei sich die Gewichtsangaben auf das Gesamtgewicht der Polyolmischung (b) enthaltend Glycin, N-((2-Hydroxy-5-nonylphenyl)methyl)-N-methylmononatrium Salz (CAS-Nummer 56968-08-2) bezieht.

12. Verfahren gemäß einem der Ansprüche 9 bis 11, **dadurch gekennzeichnet, dass** man zusätzlich zu Glycin, N-((2-Hydroxy-5-nonylphenyl)methyl)-N-methylmononatrium Salz (CAS-Nummer 56968-08-2) als Katalysator (b2) auch (2-Hydroxypropyl)trimethylammonium-2-ethylhexanoat, 1-Propanammonium-2-hydroxy-N,N,N-trimethyl-formiat, Trimethylhydroxypropylammoniumformiat, 2-((2-Dimethylamino)ethyl)methylamino)ethanol (CAS-Nummer 2212-32-0) und/oder N,N',N"-Tris(dimethylamino-propyl)hexahydrotriazin einsetzt.

13. Verfahren gemäß einem der Ansprüche 9 bis 12, **dadurch gekennzeichnet, dass** man zwischen 0,01 und 3,5 Gew.-% N,N',N"-Tris(dimethylamino-propyl)hexahydrotriazin in die Polyolmischung (b) mischt, wobei sich die Gewichtsangaben auf das Gesamtgewicht der Polyolmischung (b) enthaltend N,N',N"-Tris(dimethylamino-propyl)hexahydrotriazin bezieht.

14. Verfahren gemäß einem der Ansprüche 9 bis 13, **dadurch gekennzeichnet, dass** man zusätzlich zu Glycin, N-((2-Hydroxy-5-nonylphenyl)methyl)-N-methyl-mononatrium (CAS-Nummer 56968-08-2) als Katalysator (b2) auch Dimethylcyclohexylamin einsetzt.

15. Verfahren gemäß einem der Ansprüche 9 bis 14, **dadurch gekennzeichnet, dass** man zwischen 0,01 und 3,5 Gew.-% Dimethylcyclohexylamin in die Polyolmischung (b) mischt, wobei sich die Gewichtsangaben auf das Gesamtgewicht der Polyolmischung (b) enthaltend Dimethylcyclohexylamin bezieht.

16. Verfahren gemäß einem der Ansprüche 9 bis 15, **dadurch gekennzeichnet, dass** man zusätzlich zu Glycin, N-((2-Hydroxy-5-nonylphenyl)methyl)-N-methylmononatrium Salz (CAS-Nummer 56968-08-2) als Katalysator (b2) auch Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) einsetzt.

17. Verfahren gemäß einem der Ansprüche 9 bis 16, **dadurch gekennzeichnet, dass** man zwischen 0,01 und 3,5 Gew.-% Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) in die Polyolmischung (b) mischt, wobei sich die Gewichtsangaben auf das Gesamtgewicht der Polyolmischung (b) enthaltend Methylbis(2-dimethylaminoethyl)amin (CAS-Nummer 3030-47-5) und/oder N,N,N',N'-tetramethyl-2,2'oxybis(ethylamin) (CAS-Nummer 3033-62-3) bezieht.

18. Verfahren gemäß Anspruch 9, **dadurch gekennzeichnet, dass** man die Umsetzung bei einer Verdichtung von größer 1,1 durchführt.

19. Verfahren gemäß Anspruch 9, **dadurch gekennzeichnet, dass** man die Umsetzung bei einer Kennzahl zwischen 100 und 200 durchführt.

20. Verfahren gemäß Anspruch 9, **dadurch gekennzeichnet, dass** man die Isocyanatkomponente (a) und die Polyolmischung (b) mittels eines Mischkopfes, der axial zwischen Mantelrohr und Mediumrohr bewegt wird, einträgt.

21. Verfahren gemäß Anspruch 20, **dadurch gekennzeichnet, dass** der Mischkopf während des Schäumvorganges als Abstandshalter zwischen Mediumrohr und Mantelrohr dient.

22. Verfahren gemäß Anspruch 9, **dadurch gekennzeichnet, dass** die Polyolmischung bestehend aus (b1) Polyole, (b2) Katalysatoren sowie gegebenenfalls (b3) chemische Treibmittel, (b4) Vernetzer, (b5) Kettenverlängerungsmittel und/oder (b6) Zusatzstoffe eine Viskosität von kleiner 3000 mPas, gemessen nach DIN 53019 bei 20°C, aufweist.

23. Verfahren gemäß Anspruch 9, **dadurch gekennzeichnet, dass** die Polyolmischung (b) mindestens ein Polyol (b1i) enthält, dass eine Funktionalität gegenüber Isocyanaten von größer 3 und eine Hydroxylzahl größer 300 mg KOH/g aufweist.

24. Verfahren gemäß Anspruch 23, **dadurch gekennzeichnet, dass** das Polyol (b1i) eine Viskosität von kleiner 2500 mPas, gemessen nach DIN 53019 bei 25°C, aufweist.

25. Verfahren gemäß Anspruch 23 oder 24, **dadurch gekennzeichnet, dass** man als Polyol (b1i) ein Polyetherpolyalkohol einsetzt, dass erhältlich ist durch Alkoxylierung von Saccharose und Diethylenglykol sowie gegebenenfalls Pentaerythrit und/oder Glycerin mit Ethylenoxid und/oder Propylenoxid.

## Claims

1. An insulated pipe comprising
i) pipe for a medium,
ii) polyurethane foam and
iii) outer pipe,
wherein the polyurethane foam between the pipe for a medium (i) and the outer pipe (iii) comprises glycine, N-((2-hydroxy-5-nonylphenyl)methyl)-N-methyl monosodium salt (CAS number 56968-08-2).

2. The insulated pipe according to claim 1, wherein the polyurethane foam comprises from 0.01 to 2.5% by weight of glycine, N-((2-hydroxy-5-nonylphenyl)methyl)-N-methyl monosodium salt (CAS number 56968-08-2), based on the total weight of the polyurethane foam.

3. The insulated pipe according to claim 1 or 2, wherein the polyurethane foam comprises glycine, N-((2-hydroxy-5-nonylphenyl)methyl)-N-methyl monosodium salt (CAS number 56968-08-2) plus (2-hydroxypropyl)trimethylammonium 2-ethylhexanoate (CAS number 62314-22-1), 1-propanammonium 2-hydroxy-N,N,N-trimethylformate, trimethylhydroxypropylammonium formate, 2-((2-dimethylamino)ethyl)methylamino)ethanol (CAS number 2212-32-0) and/or N,N',N"-tris(dimethylaminopropyl)hexahydrotriazine (CAS number 15875-13-5).

4. The insulated pipe according to any of claims 1 to 3, wherein the polyurethane foam comprises from 0.01 to 2.5% by weight of N,N',N"-tris(dimethylaminopropyl)hexahydrotriazine (CAS number 15875-13-5), based on the total weight of the polyurethane foam.

5. The insulated pipe according to any of claims 1 to 4, wherein the polyurethane foam comprises glycine, N-((2-hydroxy-5-nonylphenyl)methyl)-N-methyl monosodium salt (CAS number 56968-08-2) plus dimethylcyclohexylamine (CAS number 98-94-2).

6. The insulated pipe according to any of claims 1 to 5, wherein the polyurethane foam comprises from 0.01 to 2.5% by weight of dimethylcyclohexylamine (CAS number 98-94-2), based on the total weight of the polyurethane foam.

7. The insulated pipe according to any of claims 1 to 6, wherein the polyurethane foam comprises glycine, N-((2-hydroxy-5-nonylphenyl)methyl)-N-methyl monosodium salt (CAS number 56968-08-2) plus methylbis(2-dimethylaminoethyl)amine (CAS number 3030-47-5) and/or N,N,N',N'-tetramethyl-2,2'-oxybis(ethylamine) (CAS number 3033-62-3).

8. The insulated pipe according to any of claims 1 to 7, wherein the polyurethane foam comprises from 0.01 to 2.5% by weight of methylbis(2-dimethylaminoethyl)amine (CAS number 3030-47-5) and/or N,N,N',N'-tetramethyl-2,2'-oxybis(ethylamine) (CAS number 3033-62-3), based on the total weight of the polyurethane foam.

9. A process for producing insulated pipes, which comprises the steps:
1) provision of the pipe for a medium and the outer pipe, with the pipe for a medium being located within the outer pipe,
2) production of a polyurethane foam by reaction of an isocyanate component (a) with a polyol mixture (b) between the pipe for a medium and the outer pipe,
wherein glycine, N-((2-hydroxy-5-nonylphenyl)methyl)-N-methyl monosodium salt (CAS number 56968-08-2) is mixed into the isocyanate component (a) and/or the polyol mixture (b) before reaction of the isocyanate component (a) with the polyol mixture (b).

10. The process according to claim 9, wherein the polyol mixture comprises (b1) polyols, (b2) catalysts and, if appropriate, (b3) chemical blowing agents, (b4) crosslinkers, (b5) chain extenders and/or (b6) additives.

11. The process according to claim 9 or 10, wherein from 0.01 to 3.5% by weight of glycine, N-((2-hydroxy-5-nonylphenyl)methyl)-N-methyl monosodium salt (CAS number 56968-08-2) is mixed into the polyol mixture (b), with the weights indicated being based on the total weight of the polyol mixture (b) comprising glycine, N-((2-hydroxy-5-nonylphenyl)methyl)-N-methyl monosodium salt (CAS number 56968-08-2).

12. The process according to any of claims 9 to 11, wherein (2-hydroxypropyl)trimethylammonium 2-ethylhexanoate, 1-propanammonium 2-hydroxy-N,N,N-trimethylformate, trimethylhydroxypropylammonium formate, 2-((2-dimethylamino)ethyl)methylamino)ethanol (CAS number 2212-32-0) and/or N,N',N"-tris(dimethylaminopropyl)-hexahydrotriazine are/is used in addition to glycine, N-((2-hydroxy-5-nonylphenyl)methyl)-N-methyl monosodium salt (CAS number 56968-08-2) as catalyst (b2).

13. The process according to any of claims 9 to 12, wherein from 0.01 to 3.5% by weight of N,N',N"-tris(dimethylaminopropyl)hexahydrotriazine is mixed into the polyol mixture (b), with the weights indicated being based on the total weight of the polyol mixture (b) comprising N,N',N"-tris(dimethylaminopropyl)hexahydrotriazine.

14. The process according to any of claims 9 to 13, wherein dimethylcyclohexylamine is used in addition to glycine, N-((2-hydroxy-5-nonylphenyl)methyl)-N-methyl monosodium (CAS number 56968-08-2) as catalyst (b2).

15. The process according to any of claims 9 to 14, wherein from 0.01 to 3.5% by weight of dimethylcyclohexylamine is mixed into the polyol mixture (b), with the weights indicated being based on the total weight of the polyol mixture (b) comprising dimethylcyclohexylamine.

16. The process according to any of claims 9 to 15, wherein methylbis(2-dimethylaminoethyl)amine (CAS number 3030-47-5) and/or N,N,N',N'-tetramethyl-2,2'oxybis(ethylamine) (CAS number 3033-62-3) are/is used in addition to glycine, N-((2-hydroxy-5-nonylphenyl)methyl)-N-methyl monosodium salt (CAS number 56968-08-2) as catalyst (b2).

17. The process according to any of claims 9 to 16, wherein from 0.01 to 3.5% by weight of methylbis(2-dimethylaminoethyl)amine (CAS number 3030-47-5) and/or N,N,N',N'-tetramethyl-2,2'-oxybis(ethylamine) (CAS number 3033-62-3) is mixed into the polyol mixture (b), with the weights indicated being based on the total weight of the polyol mixture (b) comprising methylbis(2-dimethylaminoethyl)amine (CAS number 3030-47-5) and/or N,N,N',N'-tetramethyl-2,2'-oxy-bis(ethylamine) (CAS number 3033-62-3).

18. The process according to claim 9, wherein the reaction is carried out at a compaction of greater than 1.1.

19. The process according to claim 9, wherein the reaction is carried out at an index of from 100 to 200.

20. The process according to claim 9, wherein the isocyanate component (a) and the polyol mixture (b) are introduced by means of a mixing head which is moved axially between the outer pipe and the pipe for a medium.

21. The process according to claim 20, wherein the mixing head serves as spacer between the pipe for a medium and the outer pipe during the foaming procedure.

22. The process according to claim 9, wherein the polyol mixture comprising (b1) polyols, (b2) catalysts and, if appropriate, (b3) chemical blowing agents, (b4) crosslinkers, (b5) chain extenders and/or (b6) additives has a viscosity of less than 3000 mPas, measured in accordance with DIN 53019 at 20°C.

23. The process according to claim 9, wherein the polyol mixture (b) comprises at least one polyol (b1i) which has a functionality toward isocyanates of greater than 3 and a hydroxyl number of greater than 300 mg KOH/g.

24. The process according to claim 23, wherein the polyol (b1i) has a viscosity of less than 2500 mPas, measured in accordance with DIN 53019 at 25°C.

25. The process according to claim 23 or 24, wherein a polyether polyalcohol which is obtainable by alkoxylation of sucrose and diethylene glycol and also, if appropriate, pentaerythritol and/or glycerol with ethylene oxide and/or propylene oxide is used as polyol (bli).

## Revendications

1. Tube isolé, construit à partir :
i) d'un tube médian
ii) de mousse de polyuréthanne et
iii) d'un tube d'enveloppe,
**caractérisé en ce que** la mousse de polyuréthanne entre le tube médian (i) et le tube d'enveloppe (iii) contient de la glycine, du sel monosodique de N-((2-hydroxy-5-nonylphényl)méthyl)-N-méthyle (numéro CAS 56968-08-2).

2. Tube isolé selon la revendication 1, **caractérisé en ce que** la mousse de polyuréthanne contient entre 0,01 et 2,5 % en poids de glycine, du sel monosodique de N-((2-hydroxy-5-nonylphényl)méthyl)-N-méthyle (numéro CAS 56968-08-2), par rapport au poids total de la mousse de polyuréthanne.

3. Tube isolé selon la revendication 1 ou 2, **caractérisé en ce que** la mousse de polyuréthanne contient, en sus de la glycine, du sel monosodique de N-((2-hydroxy-5-nonylphényl)méthyl)-N-méthyle (numéro CAS 56968-08-2), également du 2-éthylhexanoate de (2-hydroxypropyl)triméthylammonium (numéro CAS 62314-22-1), du 2-hydroxy-N,N,N-triméthyl-formiate de 1-propanammonium, du formiate de triméthylhydroxypropylammonium, du 2-((2-diméthylamino)éthyl)méthylamino)éthanol (numéro CAS 2212-32-0) et/ou de la N,N',N"-tris(diméthylaminopropyl)hexahydrotriazine (numéro CAS 15875-13-5).

4. Tube isolé selon l'une quelconque des revendications 1 à 3, **caractérisé en ce que** la mousse de polyuréthanne contient entre 0,01 et 2,5 % en poids de N,N',N"-tris(diméthylaminopropyl)hexahydrotriazine (numéro CAS 15875-13-5), par rapport au poids total de la mousse de polyuréthanne.

5. Tube isolé selon l'une quelconque des revendications 1 à 4, **caractérisé en ce que** la mousse de polyuréthanne contient, en sus de la glycine, du sel monosodique de N-((2-hydroxy-5-nonylphényl)méthyl)-N-méthyle (numéro CAS 56968-08-2), également de la diméthylcyclohexylamine (numéro CAS 98-94-2).

6. Tube isolé selon l'une quelconque des revendications 1 à 5, **caractérisé en ce que** la mousse de polyuréthanne contient entre 0,01 et 2,5 % en poids de diméthylcyclohexylamine (numéro CAS 98-94-2), par rapport au poids total de la mousse de polyuréthanne.

7. Tube isolé selon l'une quelconque des revendications 1 à 6, **caractérisé en ce que** la mousse de polyuréthanne contient, en sus de la glycine, du sel monosodique de N-((2-hydroxy-5-nonylphényl)méthyl)-N-méthyle (numéro CAS 56968-08-2), également de la méthylbis(2-diméthylaminoéthyl)amine (numéro CAS 3030-47-5) et/ou de la N,N,N',N'-tétraméthyl-2,2'oxybis(éthylamine) (numéro CAS 3033-62-3).

8. Tube isolé selon l'une quelconque des revendications 1 à 7, **caractérisé en ce que** la mousse de polyuréthanne contient entre 0,01 et 2,5 % en poids de méthylbis(2-diméthylaminoéthyl)amine (numéro CAS 3030-47-5) et/ou de la N,N,N',N'-tétraméthyl-2,2'oxybis(éthylamine) (numéro CAS 3033-62-3), par rapport au poids total de la mousse de polyuréthanne.

9. Procédé en vue de la fabrication de tubes isolés, comprenant les étapes :
1) de mise à disposition du tube médian et du tube d'enveloppe, le tube médian étant disposé au sein du tube d'enveloppe,
2) de fabrication d'une mousse de polyuréthanne par réaction d'un composant d'isocyanate (a) avec un mélange de polyols (b) entre le tube médian et le tube d'enveloppe,
**caractérisé en ce que** l'on mélange, avant la réaction des composants d'isocyanate (a) avec le mélange de polyols (b), la glycine, le sel monosodique de N-((2-hydroxy-5-nonylphényl)méthyl)-N-méthyle (numéro CAS 56968-08-2) dans les composants d'isocyanate (a) et/ou dans le mélange de polyols (b).

10. Procédé selon la revendication 9, **caractérisé en ce que** le mélange de polyols contient (b1) des polyols, (b2) des catalyseurs ainsi que, le cas échéant, (b3) des agents propulseurs chimiques, (b4) des agents de réticulation, (b5) des agents de prolongation de chaînes et/ou (b6) des additifs.

11. Procédé selon la revendication 9 ou 10, **caractérisé en ce que** l'on mélange entre 0,01 et 3,5 % en poids de glycine, du sel monosodique de N-((2-hydroxy-5-nonylphényl)méthyl)-N-méthyle (numéro CAS 56968-08-2) dans le mélange de polyols (b), les indications en poids se rapportant au poids total du mélange de polyols (b) contenant la glycine, le sel monosodique de N-((2-hydroxy-5-nonylphényl)méthyl)-N-méthyle (numéro CAS 56968-08-2).

12. Procédé selon la revendication 9 ou 11, **caractérisé en ce que** l'on utilise, en sus de la glycine, du sel monosodique de N-((2-hydroxy-5-nonylphényl)-méthyl)-N-méthyle (numéro CAS 56968-08-2), en tant que catalyseur (b2), également du 2-éthylhexanoate de (2-hydroxypropyl)triméthylammonium, du 2-hydroxy-N,N,N-triméthyl-formiate de 1-propanammonium, du formiate de triméthylhydroxypropylammonium, du 2-((2-diméthylamino)éthyl)méthylamino)éthanol (numéro CAS 2212-32-0) et/ou de la N,N',N"-tris(diméthylaminopropyl)hexahydrotriazine.

13. Procédé selon l'une quelconque des revendications 9 à 12, **caractérisé en ce que** l'on mélange entre 0,01 et 3,5 % en poids de N,N',N"-tris(diméthylaminopropyl)hexahydrotriazine dans le mélange de polyols (b), les indications en poids se rapportant au poids total du mélange de polyols (b) contenant de la N,N',N"-tris(diméthylaminopropyl)hexahydrotriazine.

14. Procédé selon l'une quelconque des revendications 9 à 13, **caractérisé en ce que** l'on utilise, en sus de la glycine, du sel monosodique de N-((2-hydroxy-5-nonylphényl)méthyl)-N-méthyle (numéro CAS 56968-08-2), en tant que catalyseur (b2), également de la diméthylcyclohexylamine.

15. Procédé selon l'une quelconque des revendications 9 à 14, **caractérisé en ce que** l'on mélange entre 0,01 et 3,5 % en poids de diméthylcyclohexylamine dans le mélange de polyols (b), les indications en poids se rapportant au poids total du mélange de polyols (b) contenant de la diméthylcyclohexylamine.

16. Procédé selon l'une quelconque des revendications 9 à 15, **caractérisé en ce que** l'on utilise, en sus de la glycine, du sel monosodique de N-((2-hydroxy-5-nonylphényl)méthyl)-N-méthyle (numéro CAS 56968-08-2), en tant que catalyseur (b2), également de la méthylbis(2-diméthylaminoéthyl)amine (numéro CAS 3030-47-5) et/ou de la N,N,N',N'-tétraméthyl-2,2'oxybis(éthylamine) (numéro CAS 3033-62-3).

17. Procédé selon l'une quelconque des revendications 9 à 16, **caractérisé en ce que** l'on mélange entre 0,01 et 3,5 % en poids de méthylbis(2-diméthylaminoéthyl)amine (numéro CAS 3030-47-5) et/ou de la N,N,N',N'-tétramethyl-2,2'oxybis(éthylamine) (numéro CAS 3033-62-3) dans le mélange de polyols (b), les indications en poids se rapportant au poids total du mélange de polyols (b) contenant de la méthylbis(2-diméthylaminoéthyl)amine (numéro CAS 3030-47-5) et/ou de la N,N,N',N'-tétraméthyl-2,2'oxybis(éthylamine) (numéro CAS 3033-62-3).

18. Procédé selon la revendication 9, **caractérisé en ce que** l'on effectue la réaction pour une compression de plus de 1,1.

19. Procédé selon la revendication 9, **caractérisé en ce que** l'on effectue la réaction pour un indice caractéristique compris entre 100 et 200.

20. Procédé selon la revendication 9, **caractérisé en ce que** l'on introduit le composant d'isocyanate (a) et le mélange de polyols (b) à l'aide d'une tête de mélange, qui est déplacée axialement entre le tube d'enveloppe et le tube médian.

21. Procédé selon la revendication 20, **caractérisé en ce que** la tête de mélange sert, pendant la procédure de moussage, d'entretoise d'écartement entre le tube médian et le tube d'enveloppe.

22. Procédé selon la revendication 9, **caractérisé en ce que** le mélange de polyols se composant (b1) de polyols, (b2) de catalyseurs ainsi que, le cas échéant, (b3) d'agents propulseurs chimiques, (b4) d'agents de réticulation, (b5) d'agents de prolongation de chaînes et/ou (b6) d'additifs, présente une viscosité de moins de 3000 mPas, mesurée selon la norme DIN 53019 à la température de 20 °C.

23. Procédé selon la revendication 9, **caractérisé en ce que** le mélange de polyols (b) contient au moins un polyol (bli), qui présente une fonctionnalité par rapport aux isocyanates de plus de 3 et un indice hydroxyle de plus de 300 mg de KOH/g.

24. Procédé selon la revendication 23, **caractérisé en ce que** le polyol (b1i) présente une viscosité de moins de 2500 mPas, mesurée selon la norme DIN 53019 à la température de 25 °C.

25. Procédé selon la revendication 23 ou 24, **caractérisé en ce que** l'on utilise en tant que polyol (b1i) un polyalcool de polyéther que l'on peut obtenir par alcoxylation du saccharose et du diéthylèneglycol ainsi que, le cas échéant, du pentaérythritol et/ou de la glycérine avec l'oxyde d'éthylène et/ou l'oxyde de propylène.
